# FASCICULE DE BREVET EUROPEEN

(11) **EP 3 465 086 B1**
(45) Date de publication et mention de la délivrance du brevet: **22.07.2020**
(21) Numéro de dépôt: 17730707.1
(22) Date de dépôt: 01.06.2017
(51) Int. Cl.: G01C 11/06, H04N 5/232, G02B 13/06, G06T 7/55, G06T 3/40, H04N 7/18

(54) **EQUIPEMENT OPTRONIQUE DE VISION POUR UN VEHICULE TERRESTRE**
OPTRONISCHES SICHTGERÄT FÜR LANDFAHRZEUG
OPTRONIC VISION EQUIPMENT FOR A LAND VEHICLE

(30) Priorité: 07.06.2016 FR 1600910
(43) Date de publication de la demande: 10.04.2019
(73) Titulaire: Thales, 92400 Courbevoie (FR)
(72) Inventeur: JEROT, Pascal, 78995 Elancourt Cedex (FR); BON, Dominique, 78995 Elancourt Cedex (FR); PERRUCHOT, Ludovic, 78995 Elancourt Cedex (FR)
(74) Mandataire: Priori, Enrico
(86) Numéro de dépôt international: PCT/EP2017/063283
(87) Numéro de publication internationale: WO 2017/211672

(56) Documents cités:
- US-A1- 2002 075 258
- US-A1- 2015 071 524

## Description

L'invention porte sur un équipement optronique de vision pour un véhicule terrestre, en particulier un véhicule blindé ou un char.

Il est connu d'équiper un tel véhicule d'une pluralité de caméras de détection/désignation opérant dans le visible ou dans l'infrarouge, orientables et présentant un champ de vision de quelques degrés - typiquement variable entre 3° et 9° ou entre 4° et 12°, pouvant éventuellement atteindre 20°. Ces caméras présentent une très bonne résolution, mais leur utilisation n'est pas aisée en raison de leur champ réduit : il est difficile pour l'opérateur de situer la petite région observée par une telle caméra dans l'environnement dans lequel évolue le véhicule. On parle à ce propos de « effet paille », car c'est comme si l'opérateur regardait à travers une paille.

Il est possible de pallier cet inconvénient en modifiant les optiques de ces caméras de manière à permettre leur fonctionnement en modalité à très grand champ (pouvant atteindre 40° - 45°). La mise en œuvre d'une telle solution est coûteuse et, de plus, le passage de la caméra en mode très grand champ ne permet pas d'avoir simultanément la vision en champ réduit.

Le document US 2002/75258 décrit un système de surveillance comprenant une première caméra, de type panoramique à plusieurs lentilles, et une seconde caméra, orientable et à haute résolution. Dans ce système, une image à haute résolution acquise par la seconde caméra est incrustée dans une image panoramique issue de la première caméra.

L'invention vise à surmonter les inconvénients de l'art antérieur, et à procurer un système de vision mieux adapté aux exigences de l'équipage d'un véhicule de type blindé ou char.

Pour ce faire, elle exploite le fait que les véhicules blindés modernes sont souvent équipés d'un système de vision à très grand champ, par exemple un capteur hémisphérique tel que le système « ANTARES » de Thales, qui assure une vision sur un angle azimutal de 360° et selon un arc vertical de -15° à 75°. Ce champ de vision très large inclut celui de la ou des caméras de détection/désignation, au moins pour certaines plages d'orientations de ces dernières. Une idée à la base de l'invention consiste alors à combiner dans un même affichage une portion d'image acquise par un tel système de vision à très grand champ et une image acquise par une caméra de détection/désignation. Conformément à l'invention, l'image à haute résolution et champ restreint provenant de la caméra de détection/désignation est incrustée dans une portion d'image à plus basse résolution et plus grand champ issue du système de vision. On obtient ainsi une image de synthèse correspondant à celle qui serait acquise par une caméra virtuelle présentant une même orientation que la caméra de détection/désignation, mais un champ de vision plus large. Avantageusement, l'utilisateur peut effectuer un zoom avant pour exploiter la haute résolution de la caméra de détection/désignation, ou un zoom arrière pour élargir son champ de vision et, par exemple, identifier des points de repère.

Ainsi, un objet de l'invention est un équipement optronique de vision destiné à équiper un véhicule terrestre comprenant :
- un capteur d'images panoramique ;
- au moins une caméra orientable, présentant une meilleure résolution dans un champ de vision plus restreint que celui du capteur d'images panoramique et contenu dans ce dernier pour au moins un ensemble d'orientations de la caméra ; et
- un dispositif d'affichage d'images ;
comprenant également un processeur de données configuré ou programmé pour :
- recevoir au moins une première image dudit capteur d'images panoramique et une deuxième image de ladite caméra orientable ;
- à partir de la première et de la deuxième image, synthétiser une image composite dans laquelle au moins une portion de la deuxième image est incrustée dans une portion de la première image ; et
- transmettre ladite image composite au dispositif d'affichage d'images ; le processeur de données étant configuré ou programmé pour synthétiser ladite image composite de telle sorte qu'elle corresponde à une image qui serait acquise par une caméra virtuelle présentant la même orientation que ladite caméra orientable, mais un champ de vision plus large.

Selon des modes de réalisation particuliers d'un tel équipement :
- Le processeur de données peut être configuré ou programmé pour modifier la largeur du champ de vision de ladite image composite en réponse à une commande provenant d'un utilisateur.
- Le processeur de données peut être configuré ou programmé pour synthétiser en temps réel un flux de dites images composites à partir d'un flux de dites première images et d'un flux de dites deuxièmes images.
- Le dispositif d'affichage d'images peut être un dispositif portable d'affichage équipé de capteurs d'orientation, l'équipement comprenant également un système d'asservissement de l'orientation de la caméra à celle du dispositif portable d'affichage.
- Le capteur d'images panoramique et la caméra orientable peuvent être adaptés pour opérer dans des plages spectrales différentes.
- Le capteur d'images panoramique peut être un capteur hémisphérique.
- La caméra orientable peut présenter un champ de vision, éventuellement variable, compris entre 1° et 20° et de préférence entre 3° et 12°.

Un autre objet de l'invention est un véhicule blindé muni d'un tel équipement optronique de vision.

Encore un autre objet de l'invention est un procédé mis en œuvre par un tel équipement optronique, comprenant les étapes suivantes :
- recevoir une première image d'un capteur d'images panoramique ;
- recevoir une deuxième image d'une caméra orientable, ladite deuxième image présentant une meilleure résolution dans un champ de vision plus restreint que celui de la première image et contenu dans ce dernier ;
- à partir de la première et de la deuxième image, synthétiser une image composite dans laquelle au moins une portion de la deuxième image est incrustée dans une portion de la première image ; ladite image composite correspondant à une image qui serait acquise par une caméra virtuelle présentant la même orientation que ladite caméra orientable, mais un champ de vision plus large; et
- afficher ladite image composite.

Selon des modes de réalisation particuliers d'un tel procédé :
- Le procédé peut comprendre également l'étape suivante modifier la largeur du champ de vision de ladite image composite en réponse à une commande provenant d'un utilisateur.
- Un flux de dites images composites peut être synthétisé en temps réel à partir d'un flux de dites première images et d'un flux de deuxièmes images.
- Ladite image composite peut être affichée sur un dispositif portable d'affichage équipé de capteurs d'orientation, le procédé comprenant également les étapes suivantes : déterminer l'orientation dudit dispositif portable d'affichage à partir de signaux générés par lesdits capteurs ; et asservir l'orientation de la caméra à celle du dispositif portable d'affichage.

D'autres caractéristiques, détails et avantages de l'invention ressortiront à la lecture de la description faite en référence aux dessins annexés donnés à titre d'exemple et dans lesquels :
- la figure 1 est une représentation schématique du principe de l'invention ;
- les figures 2A à 2E illustrent différentes images affichées lors d'une mise en œuvre de l'invention ; et
- les figures 3 et 4 illustrent schématiquement deux équipements optroniques selon des modes de réalisation respectifs de l'invention.

Dans ce document :
- L'expression « caméra de détection/désignation » indique une caméra numérique orientable, présentant un champ de vision relativement restreint - typiquement inférieur ou égal à 12° voire 15°, mais pouvant parfois atteindre 20°, aussi bien dans le plan azimutal que selon un arc vertical. Une caméra de détection/désignation peut opérer dans le spectre visible, dans le proche infrarouge (vision nocturne), dans l'infrarouge moyen ou lointain (caméra thermique), ou bien être multispectrale, voire hyperspectrale.
- Les expressions « très grand champ » et « panoramique », considérées équivalentes, désignent un champ de vision s'étendant sur au moins 45° dans le plan azimutal, selon un arc vertical ou les deux.
- L'expression « capteur hémisphérique » désigne un capteur d'images présentant un champ de vision s'étendant sur 360° dans le plan azimutal et sur au moins 45° selon un arc vertical. Il peut s'agir d'un capteur unique, utilisant par exemple un objectif de type hypergone (« fisheye »), ou bien un capteur composite constitué par un ensemble de caméras à plus petit champ de vision et un processeur numérique combinant les images acquises par ces caméras. Un capteur hémisphérique est un cas particulier de capteur d'images panoramique, ou à très grand champ.

Comme cela a été expliqué plus haut, un aspect de l'invention consiste à combiner dans un même affichage une portion d'image acquise par un système de vision hémisphérique (ou plus généralement par un système de vision à très grand champ) et une image acquise par une caméra de détection/désignation. Cela conduit à la synthèse d'une ou plusieurs images composites qui sont affichées au moyen d'un ou plusieurs dispositifs d'affichage, tel que des écrans, des casques de réalité virtuelle, etc.

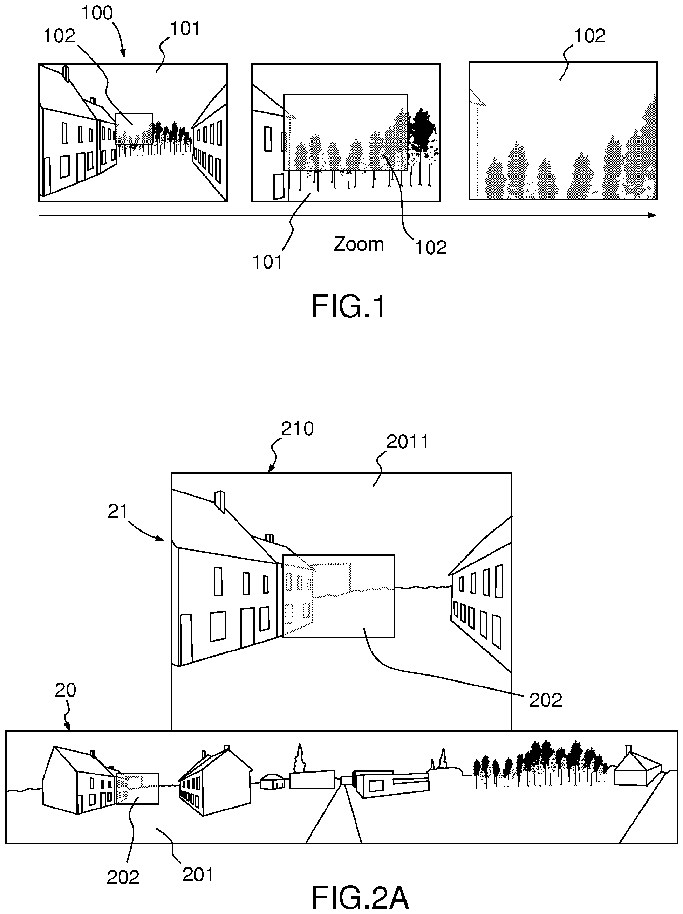

Lors de l'utilisation d'un équipement selon l'invention, un opérateur peut, par exemple, sélectionner un mode de visualisation à grand champ - disons 20° (dans le plan azimutal) x 15° (selon un arc vertical). La sélection se fait avec un outil d'interface approprié : un clavier, une molette, un joystick, etc. Un processeur de données programmé de manière opportune sélectionne alors une portion d'une image issue du système de vision hémisphérique, présentant la largeur de champ voulue et orientée selon la direction de visée de la caméra de détection/désignation. L'image acquise par la caméra de détection/désignation - correspondant par exemple à une largeur de champ de 9° x 6°, est incrustée au centre de cette image, avec le même grossissement. Cela est illustré par le panneau de gauche de la figure 1, où la référence 100 désigne l'image composite, 101 correspond à la partie extérieure de cette image composite, provenant du système de vision hémisphérique et fournissant un « contexte » permettant à l'opérateur de se repérer, tandis que 102 désigne sa partie centrale provenant de la caméra de détection/désignation. On remarque que les images élémentaires 101 et 102 présentent un même grossissement, il n'y a donc pas de rupture de continuité de la scène affichée par l'image composite. Si on fait abstraction du fait que les images élémentaires 101 et 102 n'ont pas la même résolution et peuvent corresponde à des plages spectrales distinctes, ainsi que d'un défaut de parallaxe difficilement évitable, l'image composite correspond à l'image qui serait acquise par une caméra - qu'on peut qualifier de « virtuelle » - qui aurait la même orientation que la caméra de détection/désignation mais un champ de vue plus large.

Contrairement au cas du système de surveillance document US 2002/75258, lorsqu'on modifie l'orientation de la caméra de détection/désignation l'image élémentaire 102 ne se déplace pas à l'intérieur de l'image élémentaire 101. Au contraire, la champ de vue de cette dernière se modifie pour maintenir l'image élémentaire 102 en correspondance de sa partie centrale. De cette façon c'est toujours la partie centrale de l'image composite qui présente une résolution élevée.

Si l'opérateur effectue un zoom arrière, en élargissant encore le champ de vision, la partie centrale 102 de l'image se rétrécit. S'il effectue un zoom avant, cette partie centrale 102 s'élargit au détriment de la partie extérieure 101, ce qui est représenté sur le panneau central de la figure 1, jusqu'à ce que cette dernière disparaisse (panneau de droite de la figure). On se réfère ici à une fonctionnalité de zoom numérique, mise en œuvre en modifiant l'affichage. La caméra de détection/désignation peut également comprendre un zoom optique ; lorsqu'on zoome optiquement vers l'avant, cependant, la largeur de champ de l'image issue de la caméra décroît, donc la partie centrale 102 de l'image composite 100 se rétrécit. Un zoom numérique appliqué à l'image composite 100 peut, le cas échéant, restaurer le rapport dimensionnel entre les images 101 et 102.

Avantageusement, la caméra de détection/désignation et le système de vision hémisphérique fournissent des flux d'images à une cadence de plusieurs trames par seconde. De préférence, ces images sont combinées en temps réel ou quasi-réel, c'est-à-dire avec une latence n'excédant pas 1 seconde et de préférence 0,02 seconde (cette dernière valeur correspondant à la durée standard d'une trame).

Les figures 2A à 2E illustrent plus en détail les images composites affichées sur un écran 2 d'un équipement optronique selon l'invention.

La figure 2A montre une vue d'ensemble de cet écran.

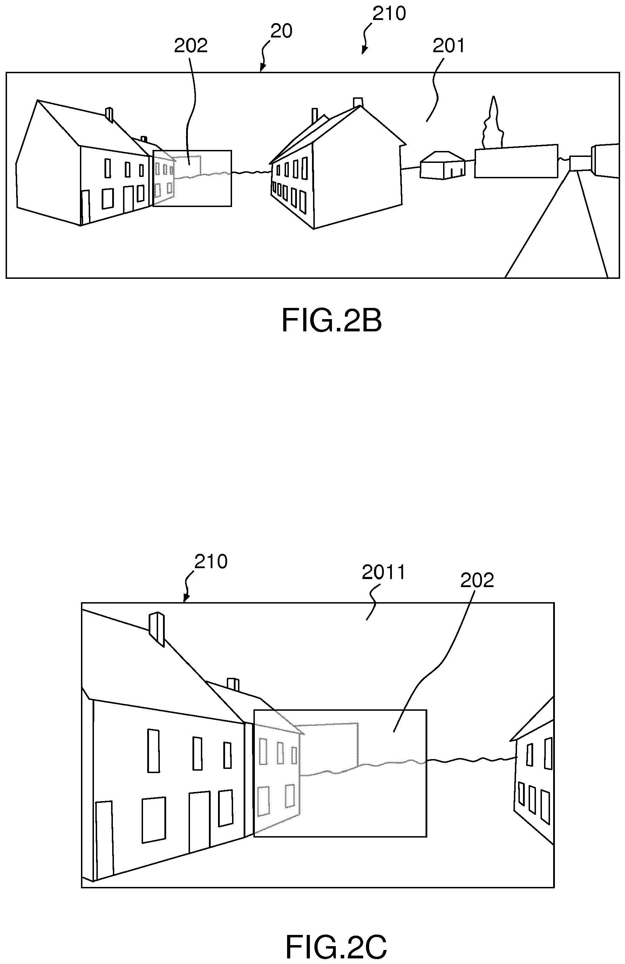

Un bandeau 20 dans la partie inférieure de l'écran correspond à une première image composite obtenue en combinant l'image panoramique 201 (360° dans le plan azimutal, de -15° à +75° perpendiculairement à ce plan) issue du capteur hémisphérique et une image 202 issue d'une caméra de détection/désignation, qui dans ce cas est une caméra infrarouge. Concrètement, un rectangle de l'image panoramique 201 est remplacé par l'image 202 (ou, dans certains cas, par une portion de cette image). Si la caméra de détection/désignation est équipée d'un zoom optique, l'image 202 peut présenter une taille variable, mais en tout cas elle n'occupera qu'une petite partie de l'image panoramique 201. La figure 2B montre un détail de ce bandeau. On remarquera que, dans le cas d'un affichage en bandeau, l'image composite n'est pas nécessairement centrée sur la direction de visée de la caméra de détection/désignation.

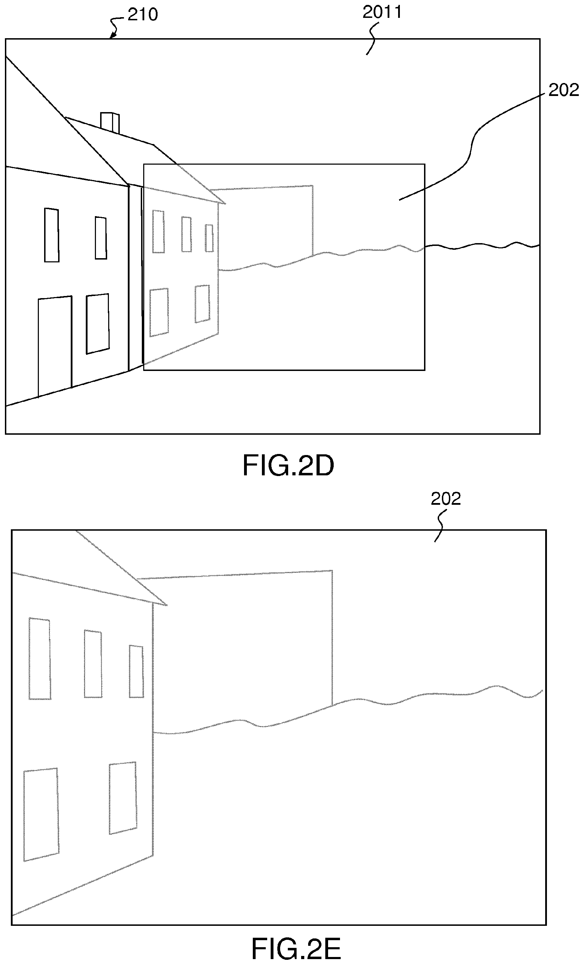

Dans la partie supérieure 21 de l'écran est affichée une deuxième image composite 210 montrant l'image 202 issue de la caméra de détection/désignation incrustée dans un contexte 2011 issu du capteur d'images hémisphérique, autrement dit une portion 2011 de l'image panoramique 201. L'utilisateur peut décider d'activer un zoom numérique (indépendant du zoom optique de la caméra de détection/désignation) pour réduire la largeur du champ de vision de l'image composite 210. L'image incrustée 202 apparait donc agrandie, au détriment de la portion 2011 de l'image panoramique. Les figures 2C, 2D et 2E correspondent à des zooms de plus en plus importants. La figure 2E, en particulier, correspond au cas limite où seule l'image 202 issue de la caméra de détection/désignation est affichée (cf. le panneau de droite de la figure 1). Bien entendu, l'utilisateur peut à tout moment décider de zoomer vers l'arrière pour bénéficier à nouveau d'une mise en contexte de l'image.

Un avantage de l'invention est de pouvoir bénéficier à la fois de l'affichage en bandeau 20 avec identification de la région observée par la caméra de détection/désignation et de l'image composite à largeur de champ intermédiaire 21. Cela ne serait pas rendu possible par la seule utilisation d'un zoom optique sur la caméra de détection/désignation.

Une autre partie de l'écran peut être utilisée pour afficher des vues de détail de l'image panoramique 201. Cela est sans rapport direct avec l'invention.

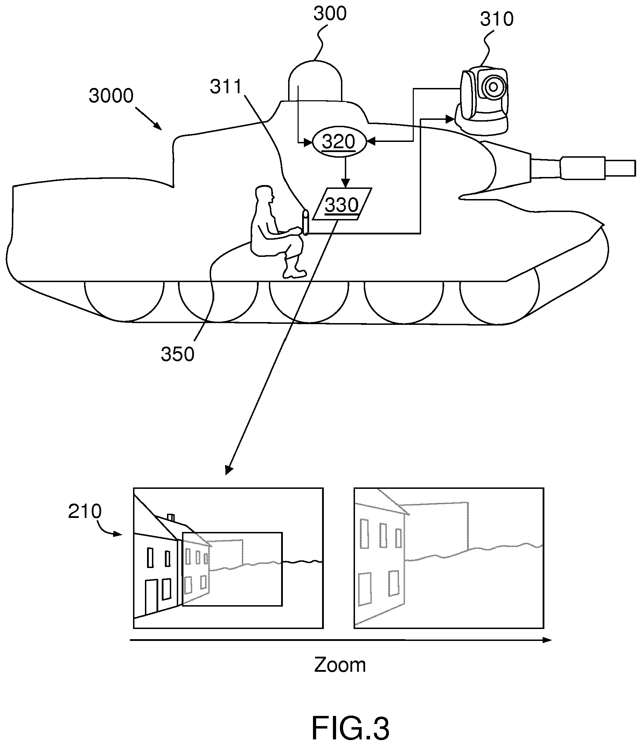

La figure 3 illustre schématiquement un équipement optronique selon un premier mode de réalisation de l'invention, installé sur un véhicule blindé 3000. La référence 300 désigne le capteur d'images hémisphérique monté sur le toit du véhicule ; 310 correspond à la caméra de détection/désignation, installé dans une tourelle ; 311 à un dispositif de commande de type joystick qui permet à un opérateur 350 de commander l'orientation de la caméra 310 ainsi que son zoom optique ; 320 désigne le processeur de données recevant des flux d'images du capteur 300 et de la caméra 310 et synthétisant une ou plusieurs images composites qui sont affichées sur l'écran 330. La partie inférieure de cette figure montre ces images composites 210, qui ont été décrites plus haut en référence aux figures 2A - 2E.

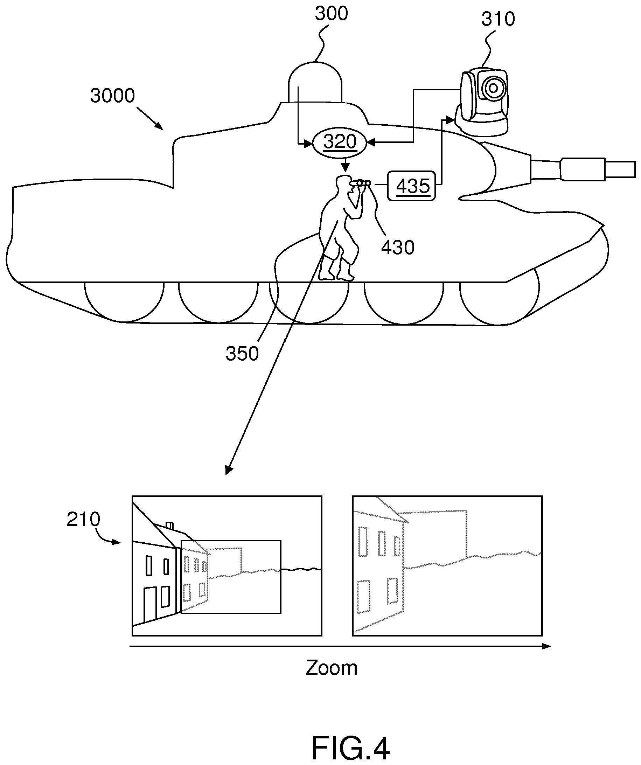

La figure 4 illustre schématiquement un équipement optronique selon un deuxième mode de réalisation de l'invention, également installé sur le véhicule blindé 3000. Cet équipement se différencie de celui de la figure 3 par le fait que l'écran d'affichage et le dispositif de commande 311 sont remplacés par un dispositif d'affichage portable 430, par exemple ressemblant à une paire de jumelles, à un casque de réalité virtuelle ou à une tablette. Ce dispositif 430 est équipé de capteurs de position et d'orientation : gyroscopes, accéléromètres, capteurs optiques...permettant de déterminer sa position et surtout son orientation par rapport à un référentiel solidaire du véhicule. Un système d'asservissement 435 - dont certains composants peuvent être communs au processeur de données 320 - asservit l'orientation de la caméra 310 à celle du dispositif 430. Les images composites affichées par le dispositif sont adaptées en temps réel aux variations d'orientation. Ainsi, l'opérateur 350 a l'illusion de regarder à travers le blindage du véhicule 3000 avec une paire de jumelles à grossissement variable. En complément, un écran peut également être présent, affichant par exemple une image composite à très grand champ, tel que le bandeau 20 illustré sur la figure 2A.

Dans les modes de réalisation qui viennent d'être décrits, l'équipement optronique comprend un seul système de vision à très grand champ (un capteur hémisphérique) et une seule caméra de détection/désignation. Cependant, de manière plus générale un tel équipement peut comprendre plusieurs systèmes de vision à très grand champ, par exemple opérant dans des régions spectrales différentes et/ou plusieurs caméras de détection/désignation pouvant être orientées de manière indépendante ou pas. Ainsi, plusieurs images composites différentes peuvent être générées et affichées.

Le processeur de données peut être un ordinateur générique ou une carte à microprocesseur spécialisée dans le traitement d'images, voire un circuit électronique numérique dédié. Pour la mise en œuvre de l'invention, il exécute des algorithmes de traitement d'images qui sont connus par eux-mêmes.

## Revendications

1. Equipement optronique de vision destiné à équiper un véhicule terrestre (3000) comprenant :
- un capteur d'images panoramique (300) ;
- au moins une caméra orientable (310), présentant une meilleure résolution dans un champ de vision plus restreint que celui du capteur d'images panoramique et contenu dans ce dernier pour au moins un ensemble d'orientations de la caméra ; et
- un dispositif d'affichage d'images (330, 430) ; comprenant également un processeur de données (320) configuré ou programmé pour :
- recevoir au moins une première image (201) dudit capteur d'images panoramique et une deuxième image (202) de ladite caméra orientable ;
- à partir de la première et de la deuxième image, synthétiser une image composite (20, 210) dans laquelle au moins une portion de la deuxième image (202) est incrustée dans une portion (2011) de la première image ; et
- transmettre ladite image composite au dispositif d'affichage d'images; **caractérisé en ce que** le processeur de données (320) est configuré ou programmé pour synthétiser ladite image composite (210) de telle sorte qu'elle corresponde à une image qui serait acquise par une caméra virtuelle présentant la même orientation que ladite caméra orientable, mais un champ de vision plus large.

2. Equipement optronique de vision selon la revendication 1 dans lequel le processeur de données (320) est configuré ou programmé pour modifier la largeur du champ de vision de ladite image composite (210) en réponse à une commande provenant d'un utilisateur (350).

3. Equipement optronique de vision selon l'une des revendications précédentes dans lequel le processeur de données (320) est configuré ou programmé pour synthétiser en temps réel un flux de dites images composites à partir d'un flux de dites première images et d'un flux de dites deuxièmes images.

4. Equipement optronique de vision selon l'une des revendications précédentes dans lequel le dispositif d'affichage d'images (430) est un dispositif portable d'affichage équipé de capteurs d'orientation, l'équipement comprenant également un système d'asservissement (435) de l'orientation de la caméra à celle du dispositif portable d'affichage.

5. Equipement optronique de vision selon l'une des revendications précédentes dans lequel le capteur d'images panoramique (300) et la caméra orientable (310) sont adaptés pour opérer dans des plages spectrales différentes.

6. Equipement optronique de vision selon l'une des revendications précédentes dans lequel le capteur d'images panoramique (300) est un capteur hémisphérique.

7. Equipement optronique de vision selon l'une des revendications précédentes dans lequel la caméra orientable (310) présente un champ de vision, éventuellement variable, compris entre 1° et 20° et de préférence entre 3° et 12°.

8. Véhicule blindé (3000) muni d'un équipement optronique de vision selon l'une des revendications précédentes.

9. Procédé mis en œuvre par un équipement optronique selon l'une des revendications précédentes, comprenant les étapes suivantes :
- recevoir une première image (201) d'un capteur (300) d'images panoramique ;
- recevoir une deuxième image (202) d'une caméra orientable (310), ladite deuxième image présentant une meilleure résolution dans un champ de vision plus restreint que celui de la première image et contenu dans ce dernier ;
- à partir de la première et de la deuxième image, synthétiser une image composite (210) dans laquelle au moins une portion de la deuxième image est incrustée dans une portion (2011) de la première image, ladite image composite (210) correspondant à une image qui serait acquise par une caméra virtuelle présentant la même orientation que ladite caméra orientable, mais un champ de vision plus large ; et
- afficher ladite image composite.

10. Procédé selon la revendication 9 dans lequel ladite image composite (210) correspond à une image qui serait acquise par une caméra virtuelle présentant la même orientation que ladite caméra orientable, mais un champ de vision plus large.

11. Procédé selon l'une des revendications 9 ou 10 comprenant également l'étape suivante :
- modifier la largeur du champ de vision de ladite image composite (210) en réponse à une commande provenant d'un utilisateur.

12. Procédé selon l'une des revendications 9 à 11, dans lequel un flux de dites images composites est synthétisé en temps réel à partir d'un flux de dites premières images et d'un flux de dites deuxièmes images.

13. Procédé selon l'une des revendications 9 à 12 dans lequel ladite image composite est affichée sur un dispositif portable d'affichage (430) équipé de capteurs d'orientation, le procédé comprenant également les étapes suivantes :
- déterminer l'orientation dudit dispositif portable d'affichage à partir de signaux générés par lesdits capteurs ; et
- asservir l'orientation de la caméra (210) à celle du dispositif portable d'affichage.

## Patentansprüche

1. Optronisches Sichtgerät, welches zur Ausrüstung eines Landfahrzeugs (3000) bestimmt ist, Folgendes beinhaltend:
- einen panoramamischen Bildsensor (300);
- mindestens eine ausrichtbare Kamera (310), welche eine bessere Auflösung in einem Sichtfeld aufweist, welches kleiner als dasjenige des panoramischen Bildsensors ist und in diesem bei mindestens einer Reihe von Ausrichtungen der Kamera enthalten ist; und
- eine Bildanzeigevorrichtung (330, 430);
beinhaltend ebenfalls einen Datenprozessor (320), welcher konfiguriert oder programmiert ist zum:
- Empfangen von mindestens einem ersten Bild (201) des panoramischen Bildsensors und eines zweiten Bildes (202) der ausrichtbaren Kamera;
- anhand des ersten und des zweiten Bildes, Erzeugen eines zusammengesetzten Bildes (20, 210), bei welchem mindestens ein Abschnitt des zweiten Bildes (202) in einen Abschnitt (2011) des ersten Bildes eingeblendet wird; und
- Übertragen des zusammengesetzten Bildes an die Bildanzeigevorrichtung; **dadurch gekennzeichnet, dass** der Datenprozessor (320) zum Erzeugen des zusammengesetzten Bildes (210) in einer Weise konfiguriert oder programmiert ist, dass es einem Bild entspricht, welches durch eine virtuelle Kamera aufgenommen würde, welche dieselbe Ausrichtung wie die ausrichtbare Kamera, jedoch ein größeres Sichtfeld besitzt.

2. Optronisches Sichtgerät nach Anspruch 1, bei welchem der Datenprozessor (320) zum Verändern der Sichtfeldbreite des zusammengesetzten Bildes (210) in Reaktion auf einen Befehl eines Benutzers (350) konfiguriert oder programmiert ist.

3. Optronisches Sichtgerät nach einem der vorhergehenden Ansprüche, bei welchem der Datenprozessor (320) zum Erzeugen eines Stroms der zusammengesetzten Bilder in Echtzeit anhand eines Stroms der ersten Bilder und eines Stroms der zweiten Bilder konfiguriert oder programmiert ist.

4. Optronisches Sichtgerät nach einem der vorhergehenden Ansprüche, bei welchem die Bildanzeigevorrichtung (430) eine tragbare Anzeigevorrichtung ist, welche mit Ausrichtungssensoren versehen ist, wobei das Gerät ebenfalls ein Nachführungssystem (435) der Ausrichtung der Kamera nach derjenigen der tragbaren Anzeigevorrichtung beinhaltet.

5. Optronisches Sichtgerät nach einem der vorhergehenden Ansprüche, bei welchem der panoramische Bildsensor (300) und die ausrichtbarer Kamera (310) angepasst sind, um in unterschiedlichen Spektralbereichen zu arbeiten.

6. Optronisches Sichtgerät nach einem der vorhergehenden Ansprüche, bei welchem der panoramische Bildsensor (300) ein halbkugelförmiger Sensor ist.

7. Optronisches Sichtgerät nach einem der vorhergehenden Ansprüche, bei welchem die ausrichtbare Kamera (310) ein Sichtfeld, welches gegebenenfalls variabel ist, zwischen 1° und 20°, und vorzugsweise zwischen 3° und 12° aufweist.

8. Panzerfahrzeug (3000), welches mit einem optronischen Sichtgerät nach einem der vorhergehenden Ansprüche ausgerüstet ist.

9. Verfahren, welches durch ein optronisches Gerät nach einem der vorhergehenden Ansprüche umgesetzt wird, folgende Schritte beinhaltend:
- Empfangen eines ersten Bildes (201) eines panoramischen Bildsensors (300);
- Empfangen eines zweiten Bildes (202) einer ausrichtbaren Kamera (310), wobei das zweite Bild eine bessere Auflösung in einem reduzierteren Sichtfeld als dasjenige des ersten Bildes aufweist und in diesem enthalten ist;
- anhand des ersten und des zweiten Bildes, Erzeugen eines zusammengesetzten Bildes (210), bei welchem mindestens ein Abschnitt des zweiten Bildes in einen Abschnitt (2011) des ersten Bilder eingeblendet ist, wobei das zusammengesetzte Bild (210) einem Bild entspricht, welches durch eine virtuelle Kamera aufgenommen würde, welche dieselbe Ausrichtung wie die ausrichtbare Kamera, jedoch ein größeres Sichtfeld besitzt; und
- Anzeigen des zusammengesetzten Bildes.

10. Verfahren nach Anspruch 9, bei welchem das zusammengesetzte Bild (210) einem Bild entspricht, welches durch eine virtuelle Kamera aufgenommen würde, welche dieselbe Ausrichtung wie die ausrichtbare Kamera, jedoch ein größeres Sichtfeld besitzt.

11. Verfahren nach einem der Ansprüche 9 oder 10, welches zudem folgenden Schritt beinhaltet:
- Verändern der Breite des Sichtfeldes des zusammengesetzten Bildes (210) in Reaktion auf einen Befehl eines Benutzers.

12. Verfahren nach einem der Ansprüche 9 bis 11, bei welchem ein Strom der zusammengesetzten Bilder in Echtzeit anhand eines Stroms der ersten Bilder und eines Stroms der zweiten Bilder erzeugt wird.

13. Verfahren nach einem der Ansprüche 9 bis 12, bei welchem das zusammengesetzte Bild auf einer tragbaren Anzeigevorrichtung (430) angezeigt wird, welche mit Ausrichtungssensoren versehen ist, wobei das Verfahren ebenfalls folgende Schritte beinhaltet:
- Bestimmen der Ausrichtung der tragbaren Anzeigevorrichtung anhand von durch die Sensoren erzeugten Signalen; und
- Nachführen der Ausrichtung der Kamera (210) nach derjenigen der tragbaren Anzeigevorrichtung.

## Claims

1. An optronic vision apparatus with which a land vehicle (3000) is intended to be equipped, comprising:
- a panoramic image sensor (300);
- at least one orientable camera (310), having a better resolution in a field of view that is smaller than the field of view of the panoramic image sensor and that is contained in the latter field of view for at least one set of orientations of the camera; and
- an image-displaying device (330, 430);
also comprising a data processor (320) that is configured or programmed to:
- receive at least one first image (201) from said panoramic image sensor and one second image (202) from said orientable camera;
- from the first and second images, synthesize a composite image (20, 210) in which at least one section of the second image (202) is embedded in a section (2011) of the first image; and
- transmit said composite image to the image-displaying device; **characterized in that** the data processor (320) is configured or programmed to synthesize said composite image (210) such that it corresponds to an image that would be acquired by a virtual camera having the same orientation as said orientable camera, but a larger field of view.

2. The optronic vision apparatus as claimed in claim 1, wherein the data processor (320) is configured or programmed to modify the width of the field of view of said composite image (210) in response to a command originating from a user (350).

3. The optronic vision apparatus as claimed in one of the preceding claims, wherein the data processor (320) is configured or programmed to synthesize in real-time a stream of said composite images from a stream of said first images and a stream of said second images.

4. The optronic vision apparatus as claimed in one of the preceding claims, wherein the image-displaying device (430) is a portable displaying device equipped with orientation sensors, the apparatus also comprising a system (435) for servo-controlling the orientation of the camera to that of the portable displaying device.

5. The optronic vision apparatus as claimed in one of the preceding claims, wherein the panoramic image sensor (300) and the orientable camera (310) are adapted to operate in different spectral ranges.

6. The optronic vision apparatus as claimed in one of the preceding claims, wherein the panoramic image sensor (300) is a hemispherical sensor.

7. The optronic vision apparatus as claimed in one of the preceding claims, wherein the orientable camera (310) has a possibly variable field of view comprised between 1° and 20° and preferably between 3° and 12°.

8. An armored vehicle (3000) equipped with an optronic vision apparatus as claimed in one of the preceding claims.

9. A method implemented by an optronic apparatus as claimed in one of the preceding claims, comprising the following steps:
- receiving a first image (201) from a panoramic image sensor (300);
- receiving a second image (202) from an orientable camera (310), said second image having a better resolution in a field of view that is smaller than the field of view of the first image and that is contained in the latter field of view;
- from the first and second images, synthesizing a composite image (210) in which at least one section of the second image is embedded in a section (2011) of the first image, said composite image (210) corresponding to an image that would be acquired by a virtual camera having the same orientation as said orientable camera, but a larger field of view; and
- displaying said composite image.

10. The method as claimed in claim 9, wherein said composite image (210) corresponds to an image that would be acquired by a virtual camera having the same orientation as said orientable camera, but a larger field of view.

11. The method as claimed in either of claims 9 and 10, also comprising the following step:
- modifying the width of the field of view of said composite image (210) in response to a command originating from a user.

12. The method as claimed in one of claims 9 to 11, wherein a stream of said composite images is synthesized in real-time from a stream of said first images and a stream of said second images.

13. The method as claimed in one of claims 9 to 12, wherein said composite image is displayed on a portable displaying device (430) equipped with orientation sensors, the method also comprising the following steps:
- determining the orientation of said portable displaying device from signals generated by said sensors; and
- servo-controlling the orientation of the camera (210) to that of the portable displaying device.
